# EUROPÄISCHE PATENTSCHRIFT

(11) **EP 4 261 159 B1**
(45) Veröffentlichungstag und Bekanntmachung des Hinweises auf die Patenterteilung: **16.09.2026**
(21) Anmeldenummer: 23154127.7
(22) Anmeldetag: 31.01.2023
(51) Int. Cl.: B65G 15/44, B29C 65/78, B29D 29/06, B29C 65/14, B29C 65/00

(54) **VERFAHREN UND VORRICHTUNG ZUR BESTÜCKUNG EINES RIEMENS MIT BAUELEMENTEN**
METHOD AND DEVICE FOR EQUIPPING A BELT WITH COMPONENTS
PROCÉDÉ ET DISPOSITIF POUR IMPLANTER DES COMPOSANTS SUR UNE COURROIE

(30) Priorität: 18.03.2022 DE 102022106444
(43) Veröffentlichungstag der Anmeldung: 18.10.2023
(73) Patentinhaber: Wilhelm Herm. Müller GmbH & Co. KG, 30826 Garbsen (DE)
(72) Erfinder: Bünger, Bernd, 29313 Hambühren (DE)
(74) Vertreter: Jabbusch, Matthias

(56) Entgegenhaltungen:
- DE-A1- 102015 224 885
- DE-A1- 102019 210 060
- US-A- 4 104 094
- US-A1- 2021 187 872
- US-B2- 10 449 723
- US-B2- 7 954 630

## Beschreibung

Die Erfindung betrifft ein Verfahren zur Bestückung eines Riemens mit Bauelementen sowie eine Vorrichtung zum Bestücken der Oberfläche eines Riemens mit zueinander beabstandeten Bauelementen.

Beispielsweise in der Fördertechnik, beispielsweise als Förderband, können Riemen, insbesondere Förderriemen zum Einsatz kommen, auf denen Bauelemente angeordnet sind. Bei den Bauelementen kann es sich beispielsweise um Mitnehmer, Nocken, Düsen oder ähnliche Elemente handeln, die auf einer Seite des Riemens angeordnet sind. Je nach Anwendungsfall können hierbei die als Mitnehmer ausgebildeten Bauelemente beabstandet zueinander angeordnet und beispielsweise parallel zueinander ausgerichtet sein. Beispielsweise können die nockenförmigen Bauelemente quer zur Längserstreckung des Riemens angeordnet sein, so dass beispielsweise Gegenstände von den Bauelementen beim Transport des Förderbandes entlang seiner Längserstreckung mitgeführt werden.

Die Bauelemente können zumindest abschnittsweise aus einem Kunststoff, beispielsweise Polyurethan, hergestellt sein. Auch der Förderriemen, insbesondere die obere Beschichtung des Förderriemens, kann aus einem Kunststoff, wie Polyurethan, hergestellt sein.

Eine Möglichkeit die Bauelemente mit dem Riemen zu verbinden ist, diese miteinander zu verkleben. Das Verkleben der einzelnen Bauelemente mit dem Riemen kann hierbei zeitaufwendig sein und insbesondere kann es problematisch sein, die hohen Anforderungen an die Haltbarkeit der Klebeverbindung sicherzustellen.

Die US 10 449 723 B2 betrifft ein Verfahren zur Herstellung eines Sandwichverbundwerkstoffs bestehend aus mindestens zwei äußeren metallischen Deckschichten und mindestens einer zwischen den Deckschichten angeordneten Kunststoffschicht, bei welchem mindestens zwei einseitig mit Kunststoff beschichtete, metallische Halbzeuge bereitgestellt werden. Zum Aufbau einer Verbindung zwischen den Kunststoffschichten der Halbzeuge wird mindestens eine der Kunststoff beschichteten Seiten der metallischen Halbzeuge vor dem Verbinden aktiviert und die Halbzeuge werden miteinander über ihre mit Kunststoff beschichteten Seiten zu einem Sandwichverbundwerkstoff verbunden. Die Aktivierung der Kunststoffschicht der Halbzeuge erfolgt unmittelbar von der mit Kunststoff beschichteten Seite des Halbzeugs her. Die US10449723B2 offenbart den Oberbegriff der Ansprüche 1 und 7.

Die US 4 104 094 A betrifft eine Vorrichtung und Verfahren zum Formen und Befestigen von Stollen an Bändern, um industrielle Förderbänder und dergleichen zu einem verwendbaren Produkt zu machen. Durch Auswahl des Vulkanisationszyklus für die Stollen, der sich von dem des Riemens selbst unterscheiden kann, können unterschiedliche Härtegrade gewählt werden. Es werden keine metallischen Befestigungselemente verwendet; vielmehr wird in einer bevorzugten Form der Stollen während des Aushärtungszyklus unter erhöhter Temperatur geformt, ausgehärtet und gegen das Band gepresst. Der Stollen wird fest mit dem Riemen verbunden oder anvulkanisiert. An den Stellen, an denen Stollen befestigt werden, kann Gummikleber verwendet werden. Die Erfindung umfasst auch die gleichzeitige Befestigung mehrerer Stollen am Gurt.

Die US 2021/187872 A1 betrifft ein Verfahren zum kontinuierlichen Schweißen einer Folie aus Kunststoffmaterial zur Herstellung flexibler Verpackungen, umfassend einen Schritt des Positionierens der Folie relativ zur Schweißvorrichtung, des In-Kontakt-Bringens der Enden der Folie, des Bildens einer Schweißnaht durch Erhitzen, Pressen und Abkühlen der in Kontakt befindlichen Enden der Folie, des Erfassens eines primären zeitlichen Signals mit einem Sensor, wobei das primäre zeitliche Signal proportional zu einer Dicke der Schweißnaht ist, des Umwandelns des primären zeitlichen Signals in ein primäres Frequenzsignal und des Definierens eines Niederfrequenzspektrums, eines Mittelfrequenzspektrums und eines Hochfrequenzspektrums aus dem primären Frequenzsignal, des Rekonstruierens eines sekundären Niederfrequenzsignals aus dem Niederfrequenzspektrum und des Bestimmens der Dicke der Schweißnaht basierend auf dem sekundären Niederfrequenzsignal.

Die DE 10 2015 224885 A1 betrifft ein Verfahren zur Herstellung von Sportartikeln, insbesondere Schuhen, aufweisend die Schritte des Bereitstellens einer Mehrzahl von Komponenten in einer von einer Mehrzahl von vordefinierten Formen und des Platzierens der Mehrzahl von Komponenten auf einer zweidimensionalen oder dreidimensionalen Trägeroberfläche zum Erzeugen des Sportartikels oder eines Teils davon. De102015224885 A1 offenbart den Oberbegriff der Ansprüche 6 und 10.

Der Erfindung liegt die Aufgabe zugrunde, ein Verfahren und eine Vorrichtung vorzuschlagen, mit denen auf einfache Art und Weise eine sichere Verbindung der Bauelemente mit dem Riemen gewährleistet ist.

Die Lösung dieser Aufgabe erfolgt mit einem Verfahren mit den Merkmalen des Patentanspruches 1 und einem Verfahren mit den Merkmalen nach dem Patentanspruchs 6 sowie mit einer Vorrichtung mit den Merkmalen des Patentanspruches 7 und mit einer Vorrichtung mit den Merkmalen des Patentanspruchs 10. Weiterbildungen und vorteilhafte Ausgestaltungen sind in den Unteransprüchen angegeben.

Bei einem Verfahren zur Bestückung eines Riemens mit Bauelementen, insbesondere mit Mitnehmern, ist vorgesehen, dass der Riemen und die Bauelemente zumindest anteilig aus einem Kunststoff bestehen, dass ein zu verbindendes Bauelement zumindest einseitig mit einer Oberfläche des Riemens verbunden wird, dass die zur Verbindung mit dem Riemen vorgesehene Verbindungsseite des zu verbindenden Bauelementes vor dem Aufsetzen auf den Riemen mit Infrarotstrahlung bestrahlt wird, wobei der zur Positionierung des Bauelementes vorgesehene Verbindungsbereich auf dem Riemen mit Infrarotstrahlung bestrahlt wird und wobei die bestrahlte Verbindungsseite des Bauelementes mit mechanischer Kraft auf den vorgesehenen bestrahlten Verbindungsbereich des Riemens gepresst wird, wobei der Riemen mit einer ersten Infrarotstrahlungsquelle bestrahlt wird und wobei das zu platzierende Bauelement mit einer zweiten Infrarotstrahlungsquelle bestrahlt wird, ist erfindungswesentlich vorgesehen, dass die erste Infrarotstrahlungsquelle quer zu der Längserstreckung des Riemens verfahrbar angeordnet ist, dass die erste Infrarotstrahlungsquelle dem Verbindungsbereich der Oberfläche des Riemens zugewandt angeordnet ist, dass die erste Infrarotstrahlungsquelle nach dem Bestrahlen des Verbindungsbereiches des Riemens verfahren wird, wobei der Verbindungsbereich freigegeben wird und dass das Bauelement mit mechanischer Kraft auf den freigegebenen bestrahlten Verbindungsbereich des Riemens gepresst wird..

Bei dem zu bestückenden Riemen kann es sich um einen länglichen Streifen aus flexiblem Material handeln. Der Riemen kann hierbei beispielsweise zu einer Endlosschleife verbunden sein oder mit zwei freien Enden vorliegen. Der Riemen kann zumindest abschnittsweise aus einem Kunststoff, insbesondere aus Polyurethan, hergestellt sein. Bei den Bauelementen kann es sich um Kunststoffelemente handeln, die beispielsweise in ihrer Breite an die Breite des Riemens angepasst sein können. Beispielsweise kann es sich bei den Bauelementen um Quader aus Polyurethan handeln. Insbesondere kann es sich bei den Bauelementen um Mitnehmer handeln, durch die Gegenstände mit dem Riemen transportiert werden können. Es kann vorgesehen sein, dass die Bauelemente mit einer ihrer Seiten, also mit der Verbindungsseite, mit einer Oberfläche des Riemens verbunden werden. Insbesondere können die Bauelemente parallel zueinander ausgerichtet und beabstandet zueinander auf einer Oberseite des Riemens angeordnet werden, wobei die Bauelemente beispielsweise den gleichen Abstand zueinander aufweisen können, aber auch in Gruppen oder ähnlichem angeordnet sein können. Zur Verbindung eines Bauelementes mit der Oberseite des Riemens wird sowohl das Bauelement als auch der Bereich, also der Verbindungsbereich des Riemens, in dem das Bauelement platziert werden soll, durch Infrarotstrahlung bestrahlt. Die Seite eines Bauelementes, die mit dem Riemen verbunden werden soll, also die Verbindungsseite des Bauelementes, wird mit einer Infrarotstrahlungsquelle so bestrahlt, dass das Bauelement an der Verbindungsseite zumindest abschnittsweise so weit erwärmt wird, dass es zumindest zu einem Anschmelzen des Materials kommt. Der Verbindungsbereich auf dem Riemen, also der Bereich in dem das Bauelement platziert werden soll, wird ebenfalls von einer Infrarotstrahlungsquelle bestrahlt, so dass auch das Material des Riemens, bei dem es sich um das gleiche Material wie das Material des Bauelementes handeln kann, zumindest abschnittweise erwärmt wird, so dass es zum Anschmelzen des Materials kommen kann.

Nach dem Bestrahlen des Verbindungsbereiches des Riemens sowie der Verbindungsseite des Bauelementes wird das Bauelement mit seiner erwärmten Verbindungsseite auf den erwärmten Verbindungsbereich des Riemens gepresst. Hierbei wird eine mechanische Kraft, die vorzugsweise senkrecht zur Oberfläche des Riemens wirkt, auf das Bauelement ausgeübt, so dass es zu einer Verbindung zwischen dem Material des Riemens und dem Material des Bauelementes kommt. Durch Abkühlen des Verbindungsbereiches des Riemens sowie der Verbindungsseite des Bauelementes kommt es zu einer dauerhaften Verbindung zwischen dem Riemen und dem Bauelement. Hierdurch ist auf einfache Art und Weise eine sichere Verbindung der Bauelemente mit dem Riemen ermöglicht, ohne auf Klebstoffe oder ähnliches zurückgreifen zu müssen.

Sowohl dem Riemen als auch dem zu platzierenden Bauelement ist jeweils eine eigene Infrarotstrahlungsquelle zugeordnet. Somit können der Verbindungsbereich des Riemens und die Verbindungsseite des Bauelementes unabhängig voneinander bestrahlt werden. Nach der Bestrahlung des Bauelementes kann dieses auf den erwärmten Verbindungsbereich des Riemens gepresst werden. Hierzu kann beispielsweise eine Positionierungseinrichtung zum Einsatz kommen.

Eine erste Infrarotstrahlungsquelle, beispielsweise ein Infrarotstrahler, ist dem Riemen zugeordnet, wobei die Strahlungsquelle so ausgerichtet ist, dass die Oberfläche des Riemens in dem Verbindungsbereich erwärmt wird. Insbesondere ist die Strahlungsaustrittsseite der Infrarotstrahlungsquelle einer Oberfläche des Riemens zugewandt angeordnet. Die erste Infrarotstrahlungsquelle ist so gelagert angeordnet, dass sie von der Oberfläche des Riemens weg verfahren oder geschwenkt werden kann. Hierdurch kann der erwärmte Verbindungsbereich frei zugänglich gemacht werden. Durch das Zurückfahren der ersten Infrarotstrahlungsquelle ist somit die Montage des bestrahlten Bauelementes nicht mehr räumlich gehindert, so dass das bestrahlte Bauelement beispielsweise von oben auf die erwärmte Oberfläche gepresst werden kann.

In einer Ausführungsform des Verfahrens werden die Bestrahlung mit Infrarotstrahlung des Verbindungsbereiches des Riemens und die Bestrahlung des Bauelementes gleichzeitig gestartet. Durch das gleichzeitige Starten der Bestrahlung kann festgelegt werden, ob der Riemen und das Bauelement gleich lang oder auch über unterschiedliche Zeitspannen bestrahlt werden und die Vorgänge können getaktet zueinander abgestimmt werden.

In einer Ausführungsform des Verfahrens weicht die Zeitspanne, mit der die vorgesehene Verbindungsposition des Riemens bestrahlt wird von der Zeitspanne, mit der die Verbindungsseite des Bauelementes bestrahlt wird, ab. Je nach Materialbeschaffenheit beziehungsweise je nach Materialstärke können die vorgesehene Verbindungsposition auf dem Riemen sowie das Bauelement mit unterschiedlichen Zeitspannen bestrahlt werden. So kann beispielsweise bei einer größeren Materialstärke eine längere Bestrahlungszeit erforderlich sein, um ein Anschmelzen des Materials zu erreichen. Auch können unterschiedliche Materialien eine unterschiedliche Bestrahlungszeit erforderlich machen, um den gleichen Schmelzgrad zu erreichen.

In einer Ausführungsform des Verfahrens ist die Zeitspanne, mit der die vorgesehene Verbindungsposition des Riemens bestrahlt wird, kürzer als die Zeitspanne mit der die Verbindungsseite des Bauelementes bestrahlt wird.

Der Riemen, beziehungsweise die Kunststoffbeschichtung des Riemens, weist eine geringere Materialstärke als ein beispielsweise als quaderförmiger Mitnehmer ausgebildetes Bauelement auf. Zum Anschmelzen der Oberfläche des Riemens wird somit eine geringere Zeitdauer der Bestrahlung benötigt, als für das Anschmelzen des beispielsweise quaderförmig ausgebildeten Bauelementes. Durch die Bestrahlung des Bauelementes und des Riemens mit unterschiedlich langen Zeitdauern kann somit jeweils der optimale Grad des Anschmelzens erreicht werden, um eine sichere Verbindung des Riemens mit dem Bauelement zu erreichen.

In einer Weiterbildung des Verfahrens wird der Riemen nach dem Aufpressen des Bauelementes weiter verfahren und das Verfahren wird an der nächsten gewünschten Verbindungsposition auf dem Riemen fortgeführt. Insbesondere kann die Position der ersten Infrarotstrahlungsquelle, die dem Riemen zugeordnet ist, räumlich festgelegt sein. Beispielsweise durch einen getakteten Antrieb kann der Riemen zu einer gewünschten Position entlang seiner Längserstreckung weiter verfahren werden, so dass ein weiterer Verbindungsbereich durch die erste Infrarotstrahlungsquelle erwärmt wird. Hierzu kann die Infrarotstrahlungsquelle nach dem Weiterverfahren des Riemens und dem Aufpressen des Bauelementes wieder über Riemen, also den nächsten vorgesehenen Verbindungsbereich verfahren werden. Insbesondere kann der Riemen im Laufe des Verfahrens immer um dieselbe Länge weiterverfahren werden, so dass die Bauelemente denselben Abstand zueinander aufweisen.

Bei einem Verfahren zur Bestückung eines Riemens mit Bauelementen, insbesondere mit Mitnehmern, wobei der Riemen und die Bauelemente zumindest anteilig aus mindestens einem Kunststoff bestehen, wobei ein zu verbindendes Bauelement zumindest einseitig mit einer Oberfläche des Riemens verbunden wird, wobei zumindest die zur Verbindung mit dem Riemen vorgesehene Verbindungsseite des zu verbindenden Bauelementes vor dem Aufsetzen auf den Riemen mit Infrarotstrahlung bestrahlt wird, wobei der zur Positionierung des Bauelementes vorgesehene Verbindungsbereich auf dem Riemen mit Infrarotstrahlung bestrahlt wird und wobei die bestrahlte Verbindungsseite des Bauelementes mit mechanischer Kraft auf den vorgesehenen bestrahlten Verbindungsbereich des Riemens gepresst wird, ist erfindungswesentlich vorgesehen, dass der Riemen und das zu positionierende Bauelement mit derselben Infrarotstrahlungsquelle bestrahlt werden, dass die Infrarotstrahlungsquelle der Oberfläche des Riemens zugewandt angeordnet ist, dass das Bauelement mit seiner Verbindungsseite im Strahlungsfeld der Infrarotstrahlungsquelle positioniert wird, dass die Bestrahlung des Riemens und des Bauelementes gestartet wird, dass der Riemen in Richtung seiner Längserstreckung weiter transportiert wird, während das Bauelement noch im Strahlungsfeld der Infrarotstrahlungsquelle verbleibt, wobei durch den Weitertransport des Riemens der erwärmte Verbindungsbereich auf den Riemen freigegeben wird, dass das Bauelement mit seiner bestrahlten Verbindungsseite aus dem Strahlungsfeld der Infrarotstrahlungsquelle entfernt wird und dass dem bestrahlten Verbindungsbereich auf dem Riemen zugewandt positioniert und auf den Verbindungsbereich des Riemens gepresst wird. In der Ausführungsform des Verfahrens ist dem Riemen sowie dem Bauelement ein und dieselbe Infrarotstrahlungsquelle zugeordnet. Auf die Anordnung weiterer Infrarotstrahlungsquellen kann somit verzichtet werden. Auch eine Verfahrbarkeit der Infrarotstrahlungsquelle ist nicht notwendig.

Die Infrarotstrahlungsquelle ist der Oberfläche des Riemens zugewandt angeordnet, so dass der Verbindungsbereich durch die Infrarotstrahlungsquelle erwärmt werden kann. Mittels einer Positionierungsvorrichtung, beispielsweise mittels eines Roboterarms, wird ein Bauelement mit seiner Verbindungsseite der Infrarotstrahlungsquelle zugewandt im Strahlungsfeld positioniert. Die Bestrahlung wird durch Einschalten der Infrarotstrahlungsquelle gestartet, wobei insbesondere die Bestrahlung des Verbindungsbereiches des Riemens sowie der Verbindungsseite des Bauelementes gleichzeitig gestartet wird. Da der Verbindungsbereich des Riemens weniger lang bestrahlt werden soll als das Bauelement, wird noch während das Bauelement durch die Strahlungsquelle bestrahlt wird, der Riemen weitertransportiert, so dass der bestrahlte Verbindungsbereich sich nicht mehr im Strahlungsfeld der Strahlungsquelle befindet. Der erwärmte Verbindungsbereich ist durch das Weiterfahren des Riemens somit freigegeben und nicht durch die oberhalb des Riemens angeordnete Infrarotstrahlungsquelle blockiert. Nach dem Weiterfahren beziehungsweise dem Weitertransport des Riemens wird das Bauelement durch die Positionierungsvorrichtung aus dem Strahlungsfeld der Strahlungsquelle entfernt und oberhalb des erwärmten Verbindungsbereiches des Riemens positioniert. Hierbei kann es beispielsweise notwendig sein, dass das Bauelement um 180 Grad gedreht wird. Beispielsweise kann das Bauelement an seiner der Verbindungsseite abgewandten Seite gegriffen werden und dem Strahlengang der Infrarotstrahlungsquelle zugewandt positioniert werden. Beispielsweise kann die Infrarotstrahlungsquelle oberhalb des Riemens positioniert sein, so dass die Verbindungsseite des Bauelementes auch nach oben zeigend unterhalb der Strahlungsquelle positioniert wird. Unterhalb der Strahlungsquelle ist die Verbindungsseite des Bauelementes somit der Oberfläche des Riemens abgewandt orientiert. Nach dem Verfahren des Riemens wird das Bauelement oberhalb der erwärmten Verbindungsstelle des Riemens positioniert und die Verbindungsseite des Bauelementes wird der Oberfläche des Riemens zugewandt positioniert, also um 180 Grad gedreht. Nun wird das Bauelement auf den erwärmten Verbindungsbereich gepresst, so dass es hier zu einer sicheren Verbindung der erwärmten Bereiche des Riemens und des Bauelementes kommt. Nach sicherer Positionierung des Bauelementes kann das Verfahren erneut gestartet werden, um weitere Bauelemente zu positionieren.

Ein weiterer Aspekt der Erfindung betrifft eine Vorrichtung zum Bestücken der Oberfläche eines Riemens mit zueinander beabstandeten Bauelementen, wobei die Vorrichtung mindestens eine Fördereinrichtung zum Fördern des Riemens entlang seiner Längserstreckung aufweist, wobei die Vorrichtung mindestens eine Infrarotstrahlungsquelle zum Bestrahlen des Riemens und/oder des zu verbindenden Bauelementes aufweist und wobei die Vorrichtung mindestens eine Positionierungsvorrichtung zum Positionieren des zu verbindenden Bauelementes aufweist, wobei die Vorrichtung zwei Infrarotstrahlungsquellen aufweist, wobei eine erste Infrarotstrahlungsquelle der beiden Infrarotstrahlungsquellen zum Bestrahlen des Verbindungsbereiches des Riemens ausgebildet ist und wobei eine zweite Infrarotstrahlungsquelle der beiden Infrarotstrahlungsquellen zum Bestrahlen mindestens eines zu platzierenden Bauelementes ausgebildet ist, bei der erfindungswesentlich vorgesehen ist, dass die erste Infrarotstrahlungsquelle der Oberfläche des Riemens zugewandt angeordnet ist und dass die erste Infrarotstrahlungsquelle quer zu der Längserstreckung des Riemens verfahrbar gelagert ist. Die Vorrichtung weist mindestens eine Antriebsrolle, vorzugsweise mehrere Antriebsrollen auf, mit der der Riemen entlang seiner Längserstreckung transportiert, also verfahren werden kann. Weiterhin weist die Vorrichtung mindestens eine Infrarotstrahlungsquelle auf, mit der der Riemen und das zu verbindende Bauelement, das beispielsweise als Mitnehmer ausgebildet sein kann, bestrahlt werden kann. Es können auch zwei Infrarotstrahlungsquellen vorgesehen sein, wobei dann eine Infrarotstrahlungsquelle dem Riemen zugeordnet ist und eine Infrarotstrahlungsquelle dem Bauelement zugeordnet ist. Weiterhin ist eine Positionierungsvorrichtung vorgesehen, mit der das zu verbindende Bauelement verfahren und positioniert werden kann. Insbesondere kann es sich bei der Positionierungsvorrichtung um einen Roboterarm, der um mehrere Achsen beweglich ist, handeln, mit dem ein zu verbindendes Bauelement aus einem Vorrat gegriffen werden kann, im Strahlungsfeld der Infrarotstrahlungsquelle positioniert werden kann und nach dem Erwärmen durch die Infrarotstrahlungsquelle auf dem Verbindungsbereich des Riemens positioniert werden kann. Die Positionierungsvorrichtung kann beispielsweise einen Greifer mit zwei Greifbacken zum Greifen eines Bauelementes aufweisen. Zum Schutz des Greifers und der Positionierungsvorrichtung vor der durch die Infrarotstrahlung erzeugten Hitze kann der Greifer beispielsweise einen Hitzeschutzschild aufweisen. Beispielsweise kann der Hitzeschutz aus metallischen Blechen, Folien oder auch textilem Material ausgebildet sein.

Durch die Zuordnung jeweils einer Infrarotstrahlungsquelle zum Riemen und zum zu platzierenden Bauelement ist eine unabhängige Bestrahlung und somit Erwärmung der zu verbindenden Bauteile ermöglicht.

Die Infrarotstrahlungsquelle, die dem Riemen zugeordnet ist, kann beispielsweise oberhalb einer Oberfläche des Riemens, also der Oberfläche des Riemens zugewandt, angeordnet sein. Hierdurch kann der Verbindungsbereich des Riemens erwärmt werden. Um die Oberfläche des Riemens zur Platzierung des erwärmten Bauelementes freizugeben, ist die erste Infrarotstrahlungsquelle verfahrbar ausgerichtet. Insbesondere kann die Infrarotstrahlungsquelle quer zur Längserstreckung des Riemens, beispielsweise mittels einer Linearsteuerung oder ähnlichem, verfahren werden. Auch ein Verschwenken oder Abklappen der Infrarotstrahlungsquelle kann ermöglicht sein. Durch das Verfahren der Infrarotstrahlungsquelle wird der erwärmte Verbindungsbereich des Riemens freigegeben, so dass eine Platzierung des erwärmten Bauelementes nicht räumlich behindert ist.

In einer Ausführungsform der Erfindung handelt es sich bei der Positionierungsvorrichtung zum Greifen und Platzieren der Bauelemente um mindestens einen Roboterarm. Mittels eines Roboterarmes, insbesondere mittels eines Roboterarmes der um mehrere Achsen beweglich ist, kann ein Bauelement aus einem Vorrat gegriffen werden, im Strahlungsfeld der Infrarotstrahlungsquelle platziert werden und auf den Verbindungsbereich des Riemens gepresst werden. Insbesondere ist eine individuelle Anpassung der Arbeitsschritte bei der Verwendung von ein oder zwei Infrarotstrahlungsquellen ermöglicht.

In einer Weiterbildung der Erfindung weist die Positionierungsvorrichtung mindestens einen Drucksensor zur Bestimmung des Anpressdruckes des zu verbindenden Riemens auf. Um eine sichere Verbindung des Bauelementes mit dem Verbindungsbereich des Riemens zu gewährleisten, weist die Positionierungsvorrichtung einen Drucksensor beziehungsweise einen Kraftsensor auf, mit dem die Anpresskraft des Bauelementes auf den Verbindungsbereich bestimmt wird. Wenn eine ausreichende Anpresskraft erreicht ist, kann das Bauelement in dieser Position gehalten werden, bis eine hinreichende Verbindung zum Riemen hergestellt ist.

Bei einer Vorrichtung zum Bestücken der Oberfläche eines Riemens mit zueinander beabstandeten Bauelementen, wobei die Vorrichtung mindestens eine Fördereinrichtung zum Fördern des Riemens entlang seiner Längserstreckung aufweist, wobei die Vorrichtung mindestens eine Infrarotstrahlungsquelle zum Bestrahlen des Riemens und/oder des zu verbindenden Bauelementes aufweist und wobei die Vorrichtung mindestens eine Positionierungsvorrichtung zum Positionieren des zu verbindenden Bauelementes aufweist, wobei die Vorrichtung genau eine Infrarotstrahlungsquelle zum Bestrahlen des Riemens und des zu positionierende Bauelementes aufweist, ist erfindungswesentlich vorgesehen, dass die Infrarotstrahlungsquelle der Oberfläche des Riemens zugewandt angeordnet ist, dass die Positionierungsvorrichtung zum Positionieren des Bauelementes mit seiner Verbindungsseite im Strahlungsfeld der Infrarotstrahlungsquelle und zum Positionieren des bestrahlten Bauelementes mit seiner Verbindungsseite auf dem bestrahlten Verbindungsbereich auf dem Riemen ausgebildet ist. Oberhalb des Verbindungsbereiches des Riemens kann eine Infrarotstrahlungsquelle angeordnet sein, wobei das Strahlungsfeld der Oberfläche des Riemens zugewandt angeordnet ist. Insbesondere kann der Riemen unterhalb der Strahlungsquelle entlang seiner Längserstreckung verfahren werden. Bei Erreichen einer ausreichenden Erwärmung des Verbindungsbereiches des Riemens wird dieser entlang der Längserstreckung des Riemens weiterbefördert, so dass die Infrarotstrahlungsquelle nicht länger oberhalb des Verbindungsbereiches angeordnet ist und dieser räumlich freigegeben ist. Mittels der Positionierungsvorrichtung, insbesondere mittels eines Roboterarmes, wird ein aus einem Vorrat gegriffenes Bauelement mit seiner Verbindungsseite im Strahlungsfeld der Strahlungsquelle positioniert. Insbesondere können der Riemen und das Bauelement gleichzeitig bestrahlt werden, wobei das Bauelement sich länger im Strahlungsfeld befindet als der Verbindungsbereich des Riemens. Nach dem Verfahren des erwärmten Verbindungsbereiches des Riemens wird das erwärmte Bauelement mit seiner Verbindungsseite so geschwenkt, dass er oberhalb des Verbindungsbereiches platziert wird und zur Herstellung der Verbindung auf den Verbindungsbereich des Riemens gepresst werden kann. Insbesondere vorteilhaft bei dieser Ausgestaltung ist, dass die unterschiedlich lange Erwärmungszeit des Riemens und des Bauelementes durch das individuelle Verfahren des Riemens sowie des Bauelementes gesteuert werden kann.

In einer Weiterbildung der Erfindung weist die Fördereinrichtung zum Fördern des Riemens einen Synchronantrieb auf. Durch die Verwendung eines Synchronantriebes ist eine getaktete Steuerung des Verfahrens möglich, so dass beispielsweise im gleichen Abstand zueinander platzierte Bauelemente mit dem Riemen verbunden werden können.

Im Folgenden wird die Erfindung anhand eines in der Zeichnung dargestellten Ausführungsbeispiels näher erläutert. Im Einzelnen zeigen die schematischen Darstellungen in
- Figuren 1 bis 4:: Verfahrensschritte bei der Durchführung mit einer Vorrichtung mit zwei Infrarotstrahlungsquellen; und
- Figuren 5 bis 13:: Verfahrensschritte bei der Durchführung mit einer Vorrichtung mit einer Infrarotstrahlungsquelle.

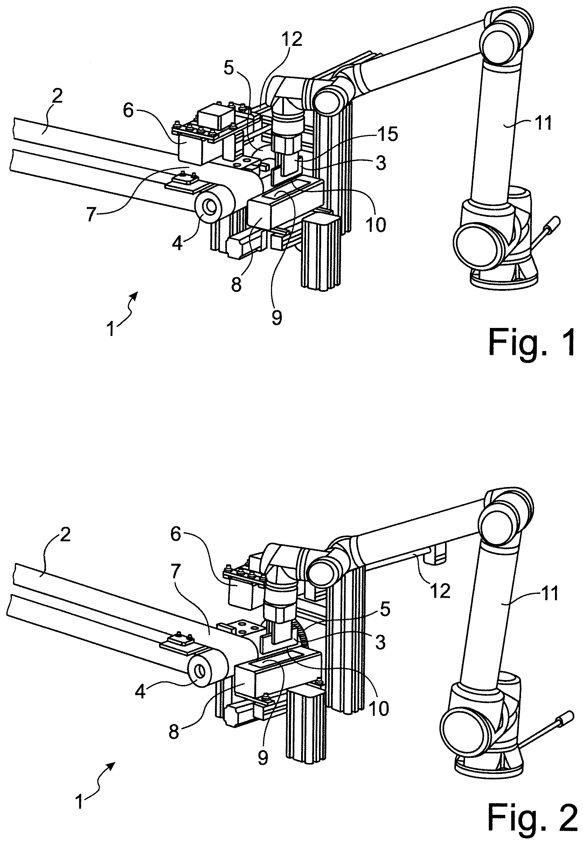

In Figur 1 ist eine Vorrichtung 1 zum Bestücken eines Riemens 2 mit einem als Mitnehmer ausgebildeten Bauelement 3 dargestellt. Der Riemen 2 wird mittels einer Fördereinrichtung 4 mit einem Synchronantrieb 5 entlang seiner Längserstreckung transportiert. Dem Riemen 2 ist eine erste Infrarotstrahlungsquelle 6 zur Erwärmung des Verbindungsbereiches 7 zugeordnet. Eine zweite Infrarotstrahlungsquelle 8 ist zur Bestrahlung des Bauelementes 3 vorgesehen. Insbesondere ist in diesem Fall die Strahlungsaustrittsseite 9 der zweiten Infrarotstrahlungsquelle 8 nach oben gerichtet, so dass die Verbindungsseite 10 des Bauelementes 3, die in diesem Fall nach unten gerichtet ist, erwärmt wird. Das Bauelement 3 wird mittels einer Positionierungsvorrichtung 11, bei der es sich in dieser Ausführungsform um einen Roboterarm mit mehreren Achsen handelt, im Strahlenfeld der zweiten Infrarotstrahlungsquelle 8 positioniert. Sowohl der Verbindungsbereich 7 des Riemens 2 als auch die Verbindungsseite 10 des Bauelementes 3 werden durch die jeweiligen Infrarotstrahlungsquellen 6 und 8 erwärmt. Die erste Infrarotstrahlungsquelle 6 ist seitlich verfahrbar zum Riemen 2, beispielsweise über eine Lagerung 12, gelagert.

In Figur 2 ist eine Vorrichtung 1 gemäß Figur 1 dargestellt. Gleiche Bauteile sind mit gleichen Bezugszeichen versehen. Nach der Erwärmung des Verbindungsbereiches 7 des Riemens 2 durch die erste Infrarotstrahlungsquelle 6 ist diese Infrarotstrahlungsquelle 6 mittels der Lagerung 12 in eine den Verbindungsbereich 7 freigebende Position verfahren. Das Bauelement 3 ist noch mit der Positionierungsvorrichtung 11 im Strahlenfeld der zweiten Infrarotstrahlungsquelle 8 gehalten, so dass die Verbindungsseite 10 des Bauelementes 3 über eine längere Zeitspanne bestrahlt wird als der Verbindungsbereich 7 des Riemens 2.

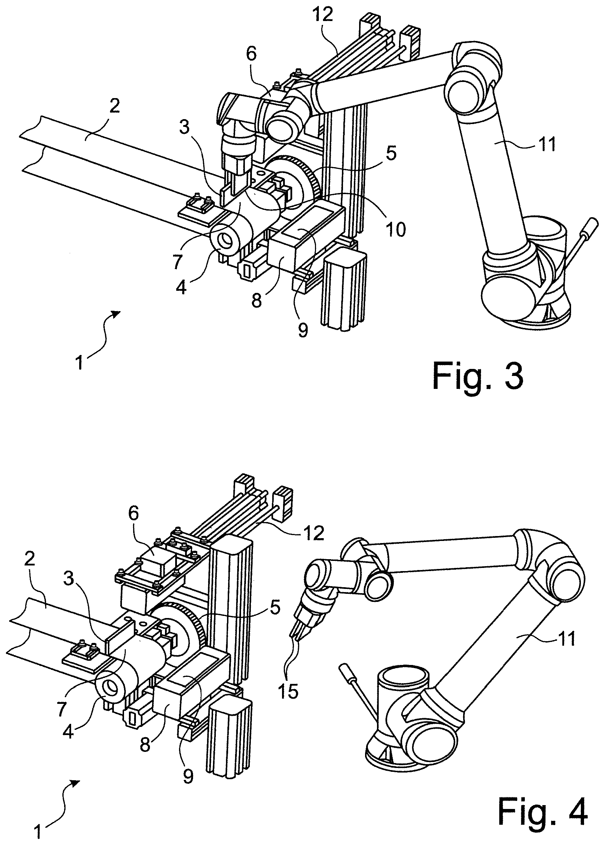

In Figur 3 ist eine Vorrichtung 1 gemäß der Figuren 1 und 2 dargestellt. Gleiche Bauteile sind mit gleichen Bezugszeichen versehen. Das Bauelement 3 mit seiner erwärmten Verbindungsseite 10 ist mittels der Positionierungsvorrichtung 11 über dem Verbindungsbereich 7 des Riemens 2 positioniert. Hierzu ist die erste Infrarotstrahlungsquelle 6 mit der Lagerung 12 in eine freigebende Position gemäß Fig. 2 verfahren. Das Bauelement 3 wird mit seiner Verbindungsseite 10 auf den Verbindungsbereich 7 gepresst, so dass sich die angeschmolzenen Bereiche des Riemens 2 und des Bauelementes 3 verbinden. Hierzu kann die Positionierungsvorrichtung 11 einen Kraftsensor aufweisen, durch den eine ausreichende Anpresskraft auf den Riemen 2 gewährleistet ist.

In Figur 4 ist eine Vorrichtung 1 gemäß der Figuren 1 bis 3 dargestellt. Gleiche Bauteile sind mit gleichen Bezugszeichen versehen. Nach der erfolgten Positionierung des Bauelementes 3 und einer sicher hergestellten Verbindung zwischen dem Bauelement 3 und dem Riemen 2 kann die Positionierungsvorrichtung 11 zurückfahren und ein neues Bauelement 3 greifen, um das Verfahren erneut zu starten.

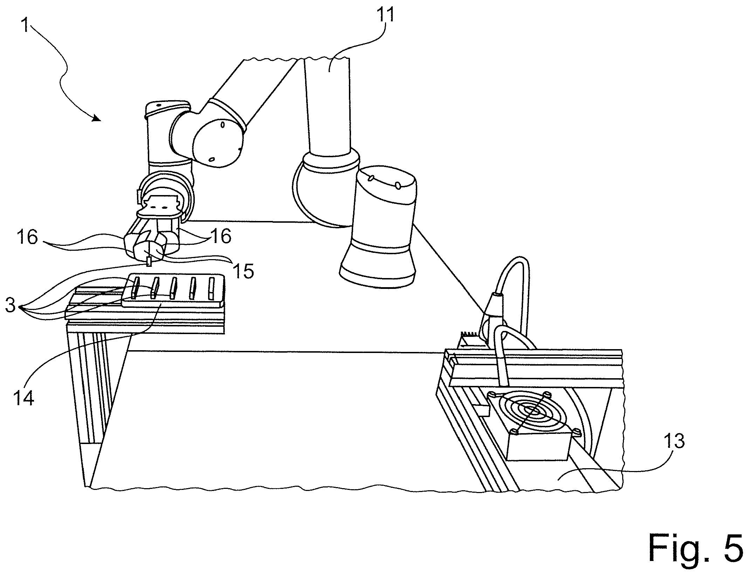

In Figur 5 ist eine alternative Ausführungsform der Erfindung mit nur einer Infrarotstrahlungsquelle 13 dargestellt, die dem Riemen 2 und dem Bauelement 3 zugeordnet ist. Mittels der Positionierungsvorrichtung 11 wird ein Bauelement 3 aus einem Vorrat 14 gegriffen. Hierzu weist die Positionierungsvorrichtung 11 Greifbacken 15 auf, zwischen denen das zu positionierende Bauelement 3 aufgenommen wird. Zum Schutz der Greifbacken 15 vor Hitzeeinwirkung durch die Infrarotstrahlungsquelle 13 ist ein Hitzeschutz 16 angeordnet.

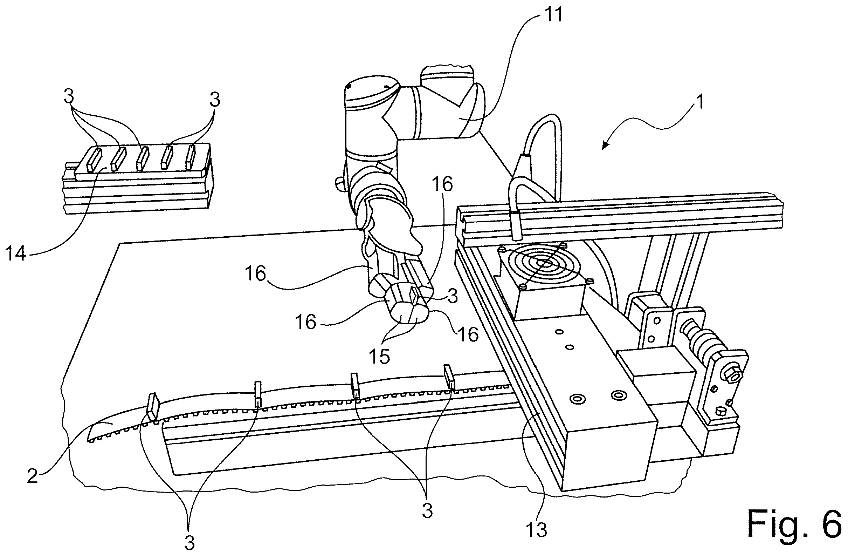

In Figur 6 ist eine Vorrichtung gemäß Figur 5 dargestellt, in das das mittels der Positionierungsvorrichtung 11 gegriffene Bauelement 3 gedreht ist, um dieses unter der Infrarotstrahlungsquelle 13 zu positionieren.

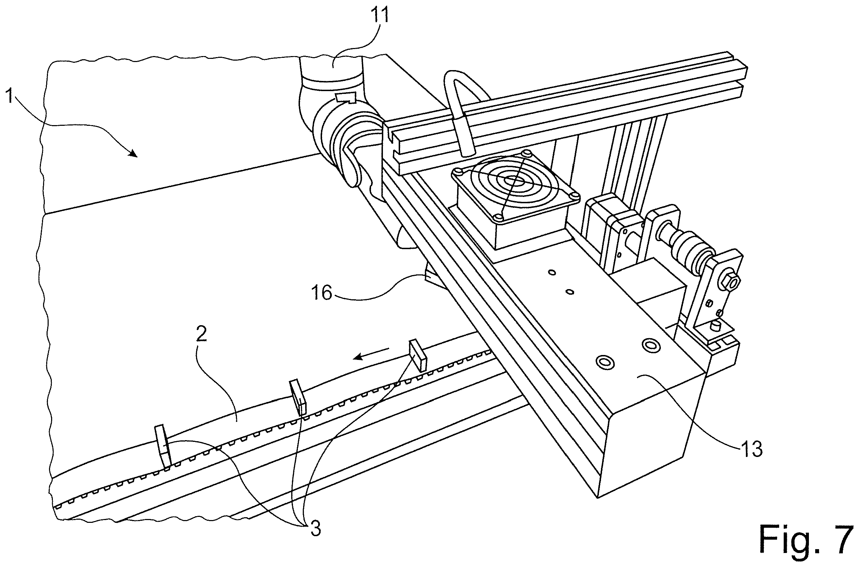

In Figur 7 ist das Bauelement 3 mit seiner Verbindungsseite 10 der Infrarotstrahlungsquelle 13 zugewandt. In diesem Fall ist die Verbindungsseite 10 also nach oben dem Strahlungsfeld der Infrarotstrahlungsquelle 13 zugewandt angeordnet. Die Infrarotstrahlungsquelle 13 ist oberhalb des Riemens 2 angeordnet, so dass unterhalb der Infrarotstrahlungsquelle 13 der Verbindungsbereich 7 des Riemens 2 erwärmt werden kann.

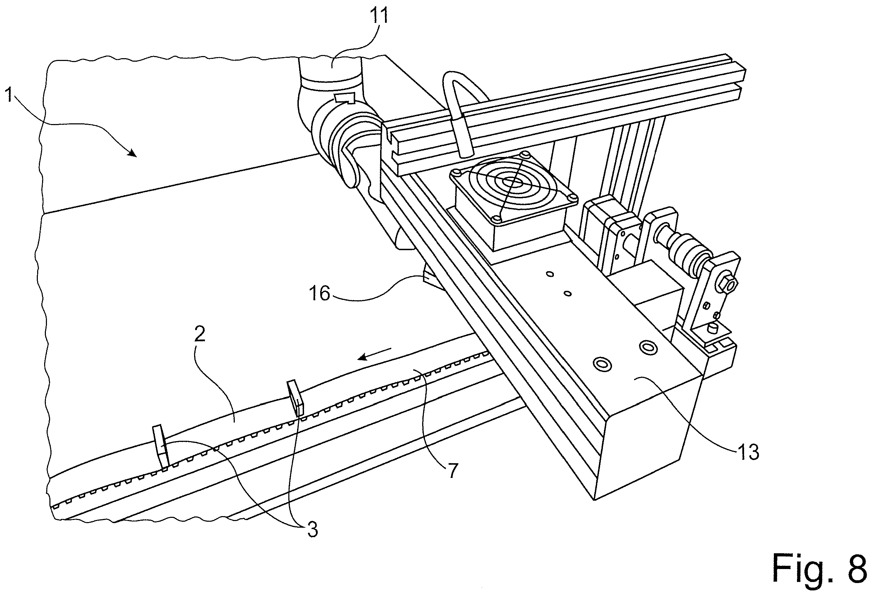

In Figur 8 ist eine Vorrichtung gemäß Figuren 5 bis 7 dargestellt, wobei der Riemen 2 entlang seiner Längserstreckung weiter transportiert wurde, um den erwärmten, während der Bestrahlung von der Infrarotstrahlungsquelle 13 verdeckten Verbindungsbereich 7 räumlich freizugeben und somit zur Montage eines Bauelementes 3 zugänglich zu machen. Das Bauelement 3 befindet sich noch im Strahlungsfeld der Infrarotstrahlungsquelle 13, wodurch sichergestellt ist, dass das Bauelement 3 eine längere Zeitspanne mittels Infrarotstrahlung bestrahlt wird als der Verbindungsbereich 7. Da das als Mitnehmer ausgebildete Bauelement 3 eine größere Materialstärke als der Verbindungsbereich 7 aufweist, ist eine längere Bestrahlungszeit zum Anschmelzen des Materials notwendig.

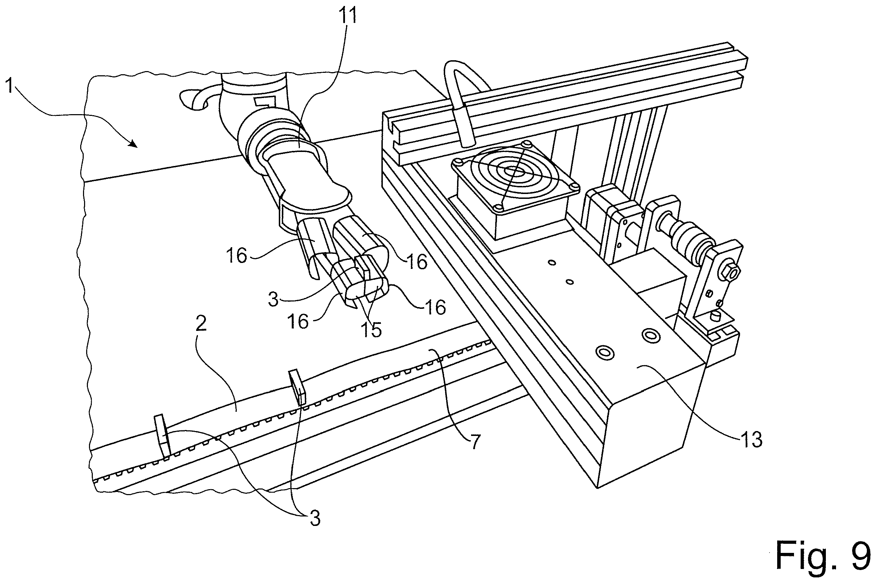

In Figur 9 ist eine Vorrichtung gemäß der Figuren 5 bis 8 dargestellt, bei der das Bauelement 3 aus dem Strahlungsfeld unter der Infrarotstrahlungsquelle 13 herausverfahren wurde, um dieses auf dem Riemen 2 platzieren zu können.

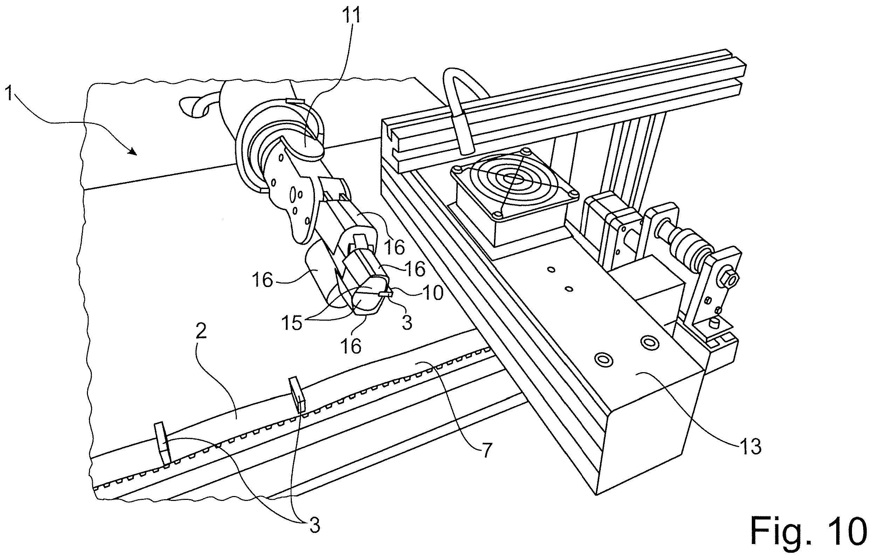

In Figur 10 ist eine Vorrichtung gemäß der Figuren 5 bis 9 dargestellt, wobei das Bauelement 3, dessen Verbindungsseite 10 unter der Infrarotstrahlungsquelle 13 nach oben orientiert war, um 180° gedreht wird, so dass die Verbindungsseite 10 dem Verbindungsbereich 7 des Riemens 2 zugewandt ausgerichtet wird.

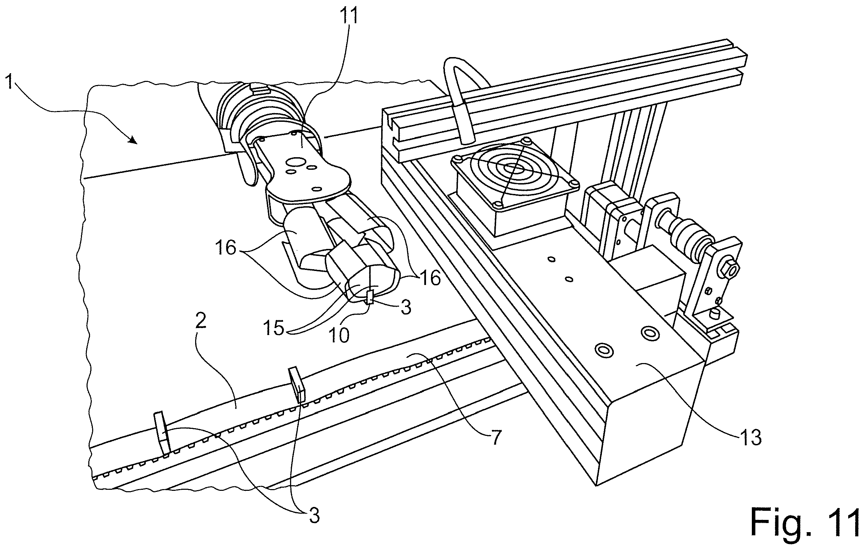

In Figur 11 ist der in Figur 10 dargestellte Verfahrensschritt vollständig durchgeführt, so dass nun die Verbindungsseite 10 des Bauelementes 3 dem Riemen 2 zugewandt ist.

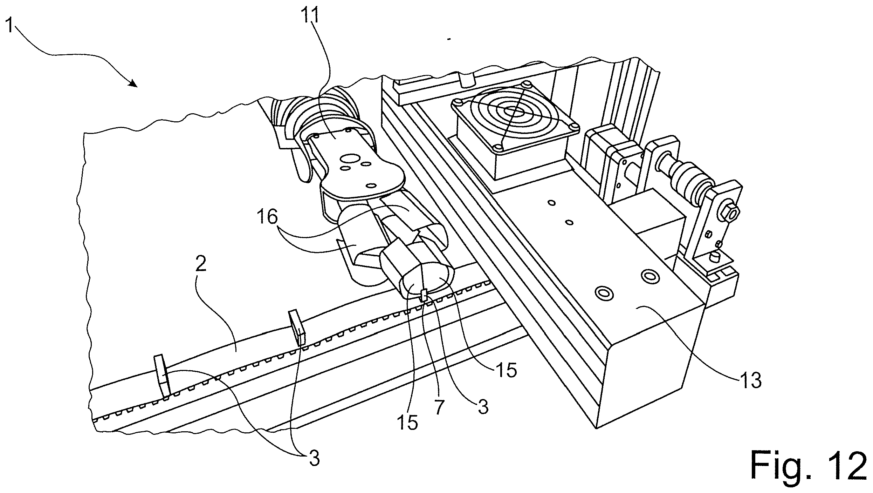

In Figur 12 ist das Bauelement 3 mit seiner Verbindungsseite 10 auf dem Verbindungsbereich 7 mittels der Positionierungsvorrichtung 11 aufgepresst, so dass durch die angeschmolzenen Bereiche eine sichere Verbindung zwischen dem Riemen 2 und dem Bauelement 3 hergestellt wird.

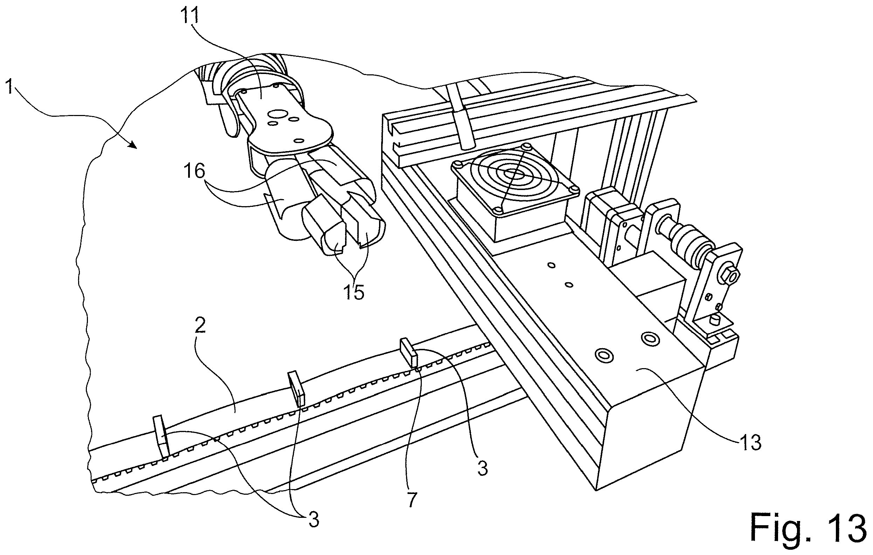

In Fig. 13 ist eine sichere Verbindung zwischen dem Riemen 2 und dem Bauelement 3 hergestellt, so dass das Bauelement 3 von der Positionierungsvorrichtung 11 mit den Greifbacken 15 losgelassen wird, um das Verfahren mit einem weiteren Bauelement 3 neu zu starten.

## Patentansprüche

1. Verfahren zur Bestückung eines Riemens (2) mit Bauelementen (3), insbesondere mit Mitnehmern, wobei der Riemen (2) und die Bauelemente (3) zumindest anteilig aus mindestens einem Kunststoff bestehen, wobei ein zu verbindendes Bauelement (3) zumindest einseitig mit einer Oberfläche des Riemens (2) verbunden wird, wobei zumindest die zur Verbindung mit dem Riemen (2) vorgesehene Verbindungsseite (10) des zu verbindenden Bauelementes (3) vor dem Aufsetzen auf den Riemen (2) mit Infrarotstrahlung bestrahlt wird, wobei der zur Positionierung des Bauelementes (3) vorgesehene Verbindungsbereich (7) auf dem Riemen (2) mit Infrarotstrahlung bestrahlt wird und wobei die bestrahlte Verbindungsseite (10) des Bauelementes (3) mit mechanischer Kraft auf den vorgesehenen bestrahlten Verbindungsbereich (7) des Riemens (2) gepresst wird, wobei der Riemen (2) mit einer ersten Infrarotstrahlungsquelle (6) bestrahlt wird und wobei das zu platzierende Bauelement (3) mit einer zweiten Infrarotstrahlungsquelle (8) bestrahlt wird,
**dadurch gekennzeichnet,**
**dass** die erste Infrarotstrahlungsquelle (6) quer zu der Längserstreckung des Riemens (2) verfahrbar angeordnet ist, dass die erste Infrarotstrahlungsquelle (6) dem Verbindungsbereich (7) der Oberfläche des Riemens (2) zugewandt angeordnet ist, dass die erste Infrarotstrahlungsquelle (6) nach dem Bestrahlen des Verbindungsbereiches (7) des Riemens (2) verfahren wird, wobei der Verbindungsbereich (7) freigegeben wird und dass das Bauelement (3) mit mechanischer Kraft auf den freigegebenen bestrahlten Verbindungsbereich (7) des Riemens (2) gepresst wird.

2. Verfahren nach Anspruch 1, **dadurch gekennzeichnet, dass** die Bestrahlung mit Infrarotstrahlung des Verbindungsbereiches (7) des Riemens (2) und die Bestrahlung des Bauelementes (3) gleichzeitig gestartet wird.

3. Verfahren nach einem der Ansprüche 1 oder 2, **dadurch gekennzeichnet, dass** die Zeitspanne mit der die vorgesehene Verbindungsposition des Riemens (2) bestrahlt von der Zeitspanne mit der die Verbindungsseite (10) des Bauelementes (3) bestrahlt wird, abweicht.

4. Verfahren nach Anspruch 3, **dadurch gekennzeichnet, dass** die Zeitspanne, mit der die vorgesehene Verbindungsposition des Riemens (2) bestrahlt wird, kürzer ist, als die Zeitspanne mit der die Verbindungsseite (10) des Bauelementes (3) bestrahlt wird.

5. Verfahren nach Anspruch 1 **dadurch gekennzeichnet, dass** der Riemen (2) nach dem Aufpressen des Bauelementes (3) weiterverfahren wird und dass das Verfahren an der nächsten gewünschten Verbindungsposition auf dem Riemen (2) fortgeführt wird.

6. Verfahren zur Bestückung eines Riemens (2) mit Bauelementen (3), insbesondere mit Mitnehmern, wobei der Riemen (2) und die Bauelemente (3) zumindest anteilig aus mindestens einem Kunststoff bestehen, wobei ein zu verbindendes Bauelement (3) zumindest einseitig mit einer Oberfläche des Riemens (2) verbunden wird, wobei zumindest die zur Verbindung mit dem Riemen (2) vorgesehene Verbindungsseite (10) des zu verbindenden Bauelementes (3) vor dem Aufsetzen auf den Riemen (2) mit Infrarotstrahlung bestrahlt wird, wobei der zur Positionierung des Bauelementes (3) vorgesehene Verbindungsbereich (7) auf dem Riemen (2) mit Infrarotstrahlung bestrahlt wird und wobei die bestrahlte Verbindungsseite (10) des Bauelementes (3) mit mechanischer Kraft auf den vorgesehenen bestrahlten Verbindungsbereich (7) des Riemens (2) gepresst wird,
**dadurch gekennzeichnet,**
**dass** der Riemen (2) und das zu positionierende Bauelement (3) mit derselben Infrarotstrahlungsquelle (13) bestrahlt werden, dass die Infrarotstrahlungsquelle (13) dem Verbindungsbereich (7) der Oberfläche des Riemens (2) zugewandt angeordnet ist, dass das Bauelement (3) mit seiner Verbindungsseite (10) im Strahlungsfeld der Infrarotstrahlungsquelle (13) positioniert wird, dass die Bestrahlung des Riemens (2) und des Bauelementes (3) gestartet wird, dass der Riemen (2) in Richtung seiner Längserstreckung weiter transportiert wird während das Bauelement (3) noch im Strahlungsfeld der Infrarotstrahlungsquelle (13) verbleibt, wobei durch den Weitertransport des Riemens (2) der erwärmte Verbindungsbereich (7) auf dem Riemen (2) freigegeben wird, dass das Bauelement (3) mit seiner bestrahlten Verbindungsseite (10) aus dem Strahlungsfeld der Infrarotstrahlungsquelle (13) entfernt wird und dem bestrahlten Verbindungsbereich (7) auf dem Riemen (2) zugewandt positioniert wird und auf den Verbindungsbereich (7) des Riemens (2) gepresst wird.

7. Vorrichtung (1) zum Bestücken der Oberfläche eines Riemens (2) mit zueinander beabstandeten Bauelementen (3), wobei die Vorrichtung (1) mindestens eine Fördereinrichtung (4) zum Fördern des Riemens (2) entlang seiner Längserstreckung aufweist, wobei die Vorrichtung (1) mindestens eine Infrarotstrahlungsquelle (6, 8, 13) zum Bestrahlen des Riemens (2) und/oder des zu verbindenden Bauelementes (3) aufweist und wobei die Vorrichtung (1) mindestens eine Positionierungsvorrichtung (11) zum Positionieren des zu verbindenden Bauelementes (3) aufweist, wobei die Vorrichtung (1) zwei Infrarotstrahlungsquellen (6, 8) aufweist, wobei eine erste Infrarotstrahlungsquelle (6) der beiden Infrarotstrahlungsquellen (6, 8) zum Bestrahlen des Verbindungsbereiches (7) des Riemens (2) ausgebildet ist und wobei eine zweite Infrarotstrahlungsquelle (8) der beiden Infrarotstrahlungsquellen (6, 8) zum Bestrahlen mindestens eines zu platzierenden Bauelementes (3) ausgebildet ist,
**dadurch gekennzeichnet,**
**dass** die erste Infrarotstrahlungsquelle (6) der Oberfläche des Riemens (2) zugewandt angeordnet ist und dass die erste Infrarotstrahlungsquelle (6) quer zu der Längserstreckung des Riemens (2) verfahrbar gelagert ist.

8. Vorrichtung (1) nach Anspruch 7, **dadurch gekennzeichnet, dass** es sich bei der Positionierungsvorrichtung (11) zum Greifen und Platzieren der Bauelemente (3) um mindestens einen Roboterarm handelt.

9. Vorrichtung (1) nach einem der Ansprüche 7 oder 8, **dadurch gekennzeichnet, dass** die Positionierungsvorrichtung (11) mindestens einen Drucksensor zur Bestimmung des Anpressdruckes des zu verbindenden Bauelementes (3) auf den Riemen (2) aufweist.

10. Vorrichtung (1) zum Bestücken der Oberfläche eines Riemens (2) mit zueinander beabstandeten Bauelementen (3), wobei die Vorrichtung (1) mindestens eine Fördereinrichtung (4) zum Fördern des Riemens (2) entlang seiner Längserstreckung aufweist, wobei die Vorrichtung (1) mindestens eine Infrarotstrahlungsquelle (6, 8, 13) zum Bestrahlen des Riemens (2) und/oder des zu verbindenden Bauelementes (3) aufweist und wobei die Vorrichtung (1) mindestens eine Positionierungsvorrichtung (11) zum Positionieren des zu verbindenden Bauelementes (3) aufweist, wobei die Vorrichtung (1) genau eine Infrarotstrahlungsquelle (13) zum Bestrahlen des Riemens (2) und des zu positionierende Bauelementes (3) aufweist,
**dadurch gekennzeichnet,**
**dass** die Infrarotstrahlungsquelle (13) der Oberfläche des Riemens (2) zugewandt angeordnet ist, dass die Positionierungsvorrichtung (11) zum Positionieren des Bauelementes (3) mit seiner Verbindungsseite (10) im Strahlungsfeld der Infrarotstrahlungsquelle (13) und zum Positionieren des bestrahlten Bauelementes (3) mit seiner Verbindungsseite (10) auf dem bestrahlten Verbindungsbereich (7) auf dem Riemen (2) ausgebildet ist.

11. Vorrichtung (1) nach einem der Ansprüche 7 bis 10, **dadurch gekennzeichnet, dass** die Fördereinrichtung (4) zum Fördern des Riemens einen Synchronantrieb (5) aufweist.

## Claims

1. A method for equipping a belt (2) with components (3), in particular with drivers, wherein the belt (2) and the components (3) consist at least partially of at least one plastic, wherein a component (3) to be connected is connected at least on one side to a surface of the belt (2), wherein at least the connecting side (10) of the component (3) to be connected that is intended for connection to the belt (2) is irradiated with infrared radiation before being placed on the belt (2), wherein the connecting area (7) on the belt (2) that is intended for the positioning of the component (3) is irradiated with infrared radiation and wherein the irradiated connecting side (10) of the component (3) is pressed with mechanical force onto the intended irradiated connecting area (7) of the belt (2), wherein the belt (2) is irradiated with a first infrared radiation source (6) and wherein the component (3) to be placed is irradiated with a second infrared radiation source (8),
**characterised in that**
the first infrared radiation source (6) is arranged moveable transversely to the longitudinal extension of the belt (2), that the first infrared radiation source (6) is arranged facing the connecting area (7) of the surface of the belt (2), that the first infrared radiation source (6) is moved after the irradiation of the connecting area (7) of the belt (2), wherein the connecting area (7) is freed and that the component (3) is pressed with mechanical force onto the freed irradiated connecting area (7) of the belt (2).

2. The method according to claim 1, **characterised in that** the irradiation with infrared radiation of the connecting area (7) of the belt (2) and the irradiation of the component (3) is started at the same time.

3. The method according to any one of claims 1 or 2, **characterised in that** the period of time for which the intended connecting position of the belt (2) is irradiated differs from the period of time for which the connecting side (10) of the component (3) is irradiated.

4. The method according to claim 3, **characterised in that** the period of time for which the intended connecting position of the belt (2) is irradiated is shorter than the period of time for which the connecting side (10) of the component (3) is irradiated.

5. The method according to claim 1, **characterised in that** the belt (2) is moved further after the component (3) has been pressed on and that the method is continued at the next desired connecting position on the belt (2).

6. A method for equipping a belt (2) with components (3), in particular with drivers, wherein the belt (2) and the components (3) consist at least partially of at least one plastic, wherein a component (3) to be connected is connected at least on one side to a surface of the belt (2), wherein at least the connecting side (10) of the component (3) to be connected that is intended for connection to the belt (2) is irradiated with infrared radiation before being placed on the belt (2), wherein the connecting area (7) on the belt (2) that is intended for the positioning of the component (3) is irradiated with infrared radiation and wherein the irradiated connecting side (10) of the component (3) is pressed with mechanical force onto the intended irradiated connection area (7) of the belt (2),
**characterised in that**
the belt (2) and the component (3) to be positioned are irradiated with the same infrared radiation source (13), that the infrared radiation source (13) is arranged facing the connecting area (7) of the surface of the belt (2), that the component (3) with its connecting side (10) is positioned in the radiation field of the infrared radiation source (13), that the irradiation of the belt (2) and the component (3) is started, that the belt (2) is transported further in the direction of its longitudinal extension while the component (3) still remains in the radiation field of the infrared radiation source (13), wherein the heated connecting area (7) on the belt (2) is freed by the further transport of the belt (2), that the component (3) with its irradiated connecting side (10) is removed from the radiation field of the infrared radiation source (13) and is positioned facing the irradiated connecting area (7) on the belt (2) and is pressed onto the connecting area (7) of the belt (2).

7. A device (1) for equipping the surface of a belt (2) with components (3) spaced apart from one another, wherein the device (1) has at least one conveyor (4) for conveying the belt (2) along its longitudinal extension, wherein the device (1) has at least one infrared radiation source (6, 8, 13) for irradiating the belt (2) and/or the component (3) to be connected and wherein the device (1) has at least one positioning device (11) for positioning the component (3) to be connected, wherein the device (1) has two infrared radiation sources (6, 8), wherein a first infrared radiation source (6) of the two infrared radiation sources (6, 8) is designed for irradiating the connecting area (7) of the belt (2) and wherein a second infrared radiation source (8) of the two infrared radiation sources (6, 8) is designed for irradiating at least one component (3) to be placed,
**characterised in that**
the first infrared radiation source (6) is arranged facing the surface of the belt (2) and that the first infrared radiation source (6) is mounted moveable transversely to the longitudinal extension of the belt (2).

8. The device (1) according to claim 7, **characterised in that** the positioning device (11) is for gripping and positioning the components (3) using at least one robotic arm.

9. The device (1) according to any one of claims 7 or 8, **characterised in that** the positioning device (11) has at least one pressure sensor for determining the contact pressure of the component (3) to be connected on the belt (2).

10. A device (1) for equipping the surface of a belt (2) with components (3) spaced apart from one another, wherein the device (1) has at least one conveyor (4) for conveying the belt (2) along its longitudinal extension, wherein the device (1) has at least one infrared radiation source (6, 8, 13) for irradiating the belt (2) and/or the component (3) to be connected and wherein the device (1) has at least one positioning device (11) for positioning the component (3) to be connected, wherein the device (1) has exactly one infrared radiation source (13) for irradiating the belt (2) and the component (3) to be positioned,
**characterised in that**
the infrared radiation source (13) is arranged facing the surface of the belt (2), that the positioning device (11) is designed for the positioning of the component (3) with its connecting side (10) in the radiation field of the infrared radiation source (13) and for positioning the irradiated component (3) with its connecting side (10) on the irradiated connection area (7) on the belt (2).

11. The device (1) according to any one of claims 7 to 10, **characterised in that** the conveyor (4) for conveying the belt has a synchronous drive (5).

## Revendications

1. Procédé, destiné à équiper une courroie (2) avec des composants (3), notamment avec des entraîneurs, la courroie (2) et les composants (3) étant constitués au moins en partie d'au moins une matière plastique, lors duquel l'on assemble un composant (3) qui doit être assemblé au moins sur une face avec une surface de la courroie (2), lors duquel, avant de la placer sur la courroie (2), l'on irradie avec un rayonnement infrarouge au moins la face d'assemblage (10) prévue pour être assemblée avec la courroie (2) du composant (3) qui doit être assemblé, lors duquel, l'on irradie avec un rayonnement infrarouge la zone d'assemblage (7) prévue pour le positionnement du composant (3) sur la courroie (2) et lors duquel, l'on presse la face d'assemblage (10) irradiée du composant (3) avec une force mécanique sur la zone d'assemblage (7) irradiée prévue de la courroie (2), lors duquel l'on irradie la courroie (2) à l'aide d'une première source infrarouge (6) et le composant (3) qui doit être placé avec une deuxième source infrarouge (8),
**caractérisé**
**en ce que** la première source infrarouge (6) est placée de sorte à être déplaçable le long de l'extension longitudinale de la courroie (2), en ce que la première source infrarouge (6) est placée de sorte à être dirigée vers la zone d'assemblage (7) de la surface de la courroie (2), en ce que l'on déplace la première source infrarouge (6) après l'irradiation de la zone d'assemblage (7) de la courroie (2), la zone d'assemblage (7) étant libérée et en ce que l'on presse le composant (3) avec une force mécanique sur la zone d'assemblage (7) irradiée libérée de la courroie (2).

2. Procédé selon la revendication 1, **caractérisé en ce que** l'on démarre simultanément l'irradiation au rayonnement infrarouge de la zone d'assemblage (7) de la courroie (2) et l'irradiation du composant (3).

3. Procédé selon l'une quelconque des revendications 1 ou 2, **caractérisé en ce que** l'intervalle de temps avec lequel l'on irradie la position d'assemblage prévue de la courroie (2) diverge de l'intervalle de temps avec lequel l'on irradie la face d'assemblage (10) du composant (3).

4. Procédé selon la revendication 3, **caractérisé en ce que** l'intervalle de temps avec lequel l'on irradie la position d'assemblage prévue de la courroie (2) est plus court que l'intervalle de temps avec lequel l'on irradie la face d'assemblage (10) du composant (3).

5. Procédé selon la revendication 1, **caractérisé en ce qu'**après avoir pressé le composant (3), l'on continue à déplacer la courroie (2) et **en ce que** l'on poursuit le procédé sur la prochaine position d'assemblage prévue sur la courroie (2).

6. Procédé, destiné à équiper une courroie (2) avec des composants (3), notamment avec des entraîneurs, la courroie (2) et les composants (3) étant constitués au moins en partie d'au moins une matière plastique, lors duquel l'on assemble un composant (3) qui doit être assemblé au moins sur une face avec une surface de la courroie (2), lors duquel, avant de la placer sur la courroie (2), l'on irradie avec un rayonnement infrarouge au moins la face d'assemblage (10) prévue pour être assemblée avec la courroie (2) du composant (3) qui doit être assemblé, lors duquel, l'on irradie avec un rayonnement infrarouge la zone d'assemblage (7) prévue pour le positionnement du composant (3) sur la courroie (2) et lors duquel, l'on presse la face d'assemblage (10) irradiée du composant (3) avec une force mécanique sur la zone d'assemblage (7) irradiée prévue de la courroie (2),
**caractérisé**
**en ce que** l'on irradie la courroie (2) et le composant (3) qui doit être positionné avec la même source infrarouge (13), en ce que la source infrarouge (13) est placée en étant dirigée vers la zone d'assemblage (7) de la surface de la courroie (2), en ce que l'on positionne le composant (3) par sa face d'assemblage (10) dans le champ de rayonnement de la source infrarouge (13), en ce que l'on démarre l'irradiation de la courroie (2) et du composant (3), en ce que la courroie (2) est transportée ultérieurement dans la direction de son extension longitudinale, alors que le composant (3) reste encore dans le champ de rayonnement de la source infrarouge (13), par le transport ultérieur de la courroie (2), la zone d'assemblage (7) chauffée sur la courroie (2) étant libérée, en ce que l'on retire le composant (3) par sa face d'assemblage (10) irradiée hors du champ de rayonnement de la source infrarouge (13) et l'on positionne la zone d'assemblage (7) irradiée sur la courroie (2) en étant dirigée vers celle-ci et on la presse sur la zone d'assemblage (7) de la courroie (2).

7. Dispositif (1), destiné à équiper la surface d'une courroie (2) avec des composants (3) écartés les uns des autres, le dispositif (1) comportant au moins un système d'acheminement (4), destiné à acheminer la courroie (2) le long de son extension longitudinale, le dispositif (1) comportant au moins une source infrarouge (6, 8, 13), destinée à irradier la courroie (2) et / ou le composant (3) qui doit être assemblé et le dispositif (1) comportant au moins un dispositif de positionnement (11), destiné à positionner le composant (3) qui doit être assemblé, le dispositif (1) comportant deux sources de rayonnement infrarouge (6, 8), une première source infrarouge (6) des deux sources de rayonnement infrarouge (6, 8) étant conçue pour irradier la zone d'assemblage (7) de la courroie (2) et une deuxième source infrarouge (8) des deux sources de rayonnement infrarouge (6, 8) étant conçue pour irradier au moins un composant (3) qui doit être placé,
**caractérisé**
**en ce que** la première source infrarouge (6) est placée en étant dirigée vers la surface de la courroie (2) et en ce que la première source infrarouge (6) est montée en étant déplaçable à la transversale de l'extension longitudinale de la courroie (2).

8. Dispositif (1) selon la revendication 7, **caractérisé en ce qu'**il s'agit, pour le dispositif de positionnement (11) destiné à saisir et à placer les composants (3) d'au moins un bras de robot.

9. Dispositif (1) selon l'une quelconque des revendications 7 ou 8, **caractérisé en ce que** le dispositif de positionnement (11) comporte au moins un capteur de pression, destiné à déterminer la pression d'appui du composant (3) qui doit être assemblé sur la courroie (2).

10. Dispositif (1), destiné à équiper la surface d'une courroie (2) avec des composants (3) écartés les uns des autres, le dispositif (1) comportant au moins un système d'acheminement (4), destiné à acheminer la courroie (2) le long de son extension longitudinale, le dispositif (1) comportant au moins une source infrarouge (6, 8, 13), destinée à irradier la courroie (2) et / ou le composant (3) qui doit être assemblé et le dispositif (1) comportant au moins un dispositif de positionnement (11), destiné à positionner le composant (3) qui doit être assemblé, le dispositif (1) comportant précisément une source infrarouge (13), destinée à irradier la courroie (2) et le composant (3) qui doit être positionné,
**caractérisé**
**en ce que** la source infrarouge (13) est placée en étant dirigée vers la surface de la courroie (2), en ce que le dispositif de positionnement (11) est conçu pour positionner le composant (3) par sa face d'assemblage (10) dans le champ de rayonnement de la source infrarouge (13) et pour positionner le composant (3) irradié par sa face d'assemblage (10) sur la zone d'assemblage (7) irradiée sur la courroie (2).

11. Dispositif (1) selon l'une quelconque des revendications 7 à 10, **caractérisé en ce que** le système d'acheminement (4) destiné à acheminer la courroie comporte un entraînement synchrone (5).
